(19) Europäisches Patentamt
European Patent Office
Office européen des brevets

(11) **EP 4 020 417 A1**

(12) **EUROPÄISCHE PATENTANMELDUNG**

(43) Veröffentlichungstag:
   **29.06.2022   Patentblatt 2022/26**

(21) Anmeldenummer: **20217326.6**

(22) Anmeldetag: **27.12.2020**

(51) Internationale Patentklassifikation (IPC):
   **G07G 1/14** *(2006.01)*    **G07G 1/00** *(2006.01)*
   **G06Q 20/20** *(2012.01)*   **G06Q 20/18** *(2012.01)*
   **G01G 19/414** *(2006.01)*  **A47F 3/00** *(2006.01)*
   **A47F 9/04** *(2006.01)*

(52) Gemeinsame Patentklassifikation (CPC):
   **G07G 1/14; G01G 19/4144; G06Q 20/18;**
   **G06Q 20/208; G07G 1/0072;** A47F 9/048

(84) Benannte Vertragsstaaten:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Benannte Erstreckungsstaaten:
   **BA ME**
   Benannte Validierungsstaaten:
   **KH MA MD TN**

(71) Anmelder: **Bizerba SE & Co. KG**
   **72336 Balingen (DE)**

(72) Erfinder:
   • **Andronic, Tudor**
     **9548 Matzingen (CH)**
   • **Huber, Meik**
     **75870 Mühlheim (DE)**

(74) Vertreter: **Huber, Meik**
   **Bizerba SE & Co. KG**
   **PF 18/1**
   **Wilhelm-Kraut-Straße 65**
   **72336 Balingen (DE)**

(54) **SELF-CHECKOUT STORE**

(57)   Die vorliegende Erfindung betrifft ein Verfahren zum Betrieb einer Verkaufsvorrichtung für Waren, insbesondere Einzelhandelswaren und eine Verkaufsvorrichtung zum Selbst-Checkout von Waren, insbesondere Einzelhandelswaren.

Fig. 1

EP 4 020 417 A1

**Beschreibung**

Die vorliegende Erfindung betrifft ein Verfahren zum Betrieb einer Verkaufsvorrichtung für Waren, insbesondere Einzelhandelswaren und eine Verkaufsvorrichtung zum Selbst-Checkout von Waren, insbesondere Einzelhandelswaren.

Eine Vorrichtung zum bedienerlosen Verkauf, insbesondere zur bedienerlosen Abrechnung in Supermärkten, ist dem Fachmann zum Beispiel aus der EP1717772A1 bekannt. Diese bietet ein System, bei dem der Kunde im Supermarkt wie gewohnt Produkte in einen Einkaufswagen verbringt. Der Kunde scannt beim Gang durch den Supermarkt jedes Produkt, das er in den Einkaufswagen legt. An der Kasse wird die Information über die gescannten Produkte vom Scanner an ein Abrechnungsterminal übertragen. Der Kunde kann dann seinen Einkauf bezahlen. Um den Kunden auf Fehler beim Scanvorgang hinweisen zu können, sind an der Kasse verschiedene Validationsverfahren vorgesehen, z. B. basierend auf optischen Verfahren oder auf Gewichtserkennungsverfahren. Im Falle von Abweichungen zwischen den Artikeln im Einkaufswagen und den gescannten Artikeln muss dies an der Kasse korrigiert werden.

Ebenfallens sind dem Fachmann Regalsysteme mit integrierter Bestandsüberwachung, wie in der EP3620760B1 gezeigt, bekannt. Eine bisher unveröffentlichte Europäische Patentanmeldung EP19220148.1 des Anmelders zeigt eine weitere Variante eines Regalsystems mit integrierter Bestandsüberwachung. Auf einer Auflagefläche werden Waren einem Kunden zur Entnahme angeboten. Über eine Gewichtsermittlung wird bestimmt, von welcher Stelle eine Ware von der Auslagefläche entnommen wurde. Eine Bestandsüberwachung wird mit der Information über die entnommenen Waren fortlaufend aktualisiert.

Aufgabe der Erfindung ist es, ein Verfahren zum Betrieb einer Verkaufsvorrichtung für Waren und eine zugehörige Verkaufsvorrichtung zum Selbst-Checkout zur Verfügung zu stellen, das weniger fehleranfällig ist und dessen Validationsverfahren optimiert ist.

Diese Aufgabe wird durch ein Verfahren zum Betrieb einer Verkaufsvorrichtung für Waren nach Anspruch 1 und eine Verkaufsvorrichtung zum Selbst-Checkout von Waren in einem Ladengeschäft nach Anspruch 14 gelöst.

Erfindungsgemäß wird ein Verfahren zum Betrieb einer Verkaufsvorrichtung für Waren vorgeschlagen. Dabei handelt es sich insbesondere um Einzelhandelswaren. Das Verfahren umfasst die Schritte:

- Detektieren eines entnommenen Artikels und Bestimmung von dessen Artikeldaten. Dieser Schritt wird von einem Regal mit automatischer Entnahmeüberwachung ausgeführt. Automatische Entnahmeüberwachung meint in diesem Zusammenhang, dass das Regal derart ausgestaltet ist, dass die Entnahme eines Artikels detektiert werden kann. Entnahmeüberwachung in diesem Zusammenhang ist nicht so zu verstehen, dass das Regal oder ein mit dem Regal verbundenes Warenwirtschaftssystem notwendigerweise den aktuellen Warenbestand in dem Regal kennen oder errechnen muss. In einer Ausführungsform handelt es sich um ein Regal mit integrierter Bestandsüberwachung, dessen Funktionalität zur Warendetektion für die Bestandsüberwachung gleichzeitig als Entnahmeüberwachung für das Verfahren zum Betrieb der Verkaufsvorrichtung genutzt wird. In einer Ausführungsform erfolgt das Detektieren eines entnommenen Artikels mit einer Kamera oder mit einem optischen Sensor. In einer Ausführungsform erfolgt das Detektieren eines entnommenen Artikels mit Hilfe von Gewichtssensoren.
- Empfangen der Artikeldaten des entnommenen Artikels. Diese Artikeldaten werden von einer Steuervorrichtung empfangen.
- Hinzufügen der Artikeldaten des entnommenen Artikels zu einer Liste von zur Bezahlung vorgesehenen Artikel. Dieser Schritt wird mit der Steuervorrichtung ausgeführt. Die Liste von zur Bezahlung vorgesehener Artikel umfasst Artikel, die aus den Regalen bereits entnommen wurden, die jedoch noch nicht bezahlt wurden. Diese Liste wird fortlaufend durch die Steuervorrichtung aktualisiert.
- Empfangen einer Artikelnummer von einem Produktscanner. Die Artikelnummer wird durch die Steuervorrichtung empfangen. Der Produktscanner ermittelt die Artikelnummer zum Beispiel dadurch, dass ein Kunde einen Barcode eines Artikels scannt, wenn er den Artikel aus dem Regal nimmt und in seinen Einkaufswagen oder Einkaufskorb legt. In einer Ausführungsform ist der Produktscanner ein Smartphone, auf dem eine entsprechende App zum Scannen des Artikels vorhanden ist. Diese App sendet die Artikelnummer dann über ein Netzwerk, von dem die Verkaufsvorrichtung die Artikelnummer empfängt.
- Hinzufügen des zur Artikelnummer zugehörigen Artikel zu einer Liste, die dem Produktscanner zugeordnet ist. Dieser Schritt wird in der Steuervorrichtung ausgeführt. In einer Ausführungsform wird in der Steuervorrichtung für jeden Produktscanner einer Liste geführt und fortlaufend aktualisiert, auf denen alle Artikel vermerkt sind, die mit dem Produktscanner gescannt wurden. Dies sind die Artikel, die durch den Kunden bei diesem Einkauf in den Einkaufswagen oder Einkaufskorb gelegt wurden und noch bezahlt werden müssen. In einer Ausführungsform werden die Artikel auf der Liste der zur Bezahlung vorgesehener Artikel mit einem Parameter versehen, um sie einem entsprechenden Produktscanner zuzuweisen.
- Identifizieren des Produktscanners an der Verkaufsvorrichtung. In einer Ausführungsform erfolgt dieser Schritt dadurch, dass mit dem Produktscanner ein QR Code einer Verkaufsvorrichtung eingescannt wird und der Produktscanner an die Steuervorrichtung eine Information sendet, mit welcher Verkaufsvorrichtung er verbunden wurde.

Das Identifizieren des Produktscanners an der Verkaufsvorrichtung erfolgt in diesem Schritt auf indirekte Weise. Dies ist ebenfalls als identifizieren des Produktscanners an der Verkaufsvorrichtung zu verstehen.

- Erheben von Daten über Artikel in einem Einkaufswagen oder einem Einkaufskorb, welcher auf einer Auflageplatte der Verkaufsvorrichtung steht. Hierzu wird mindestens ein Sensor benutzt.
- Validieren der dem Produktscanner zugeordneten Liste mit Artikeln aufgrund der Daten des mindestens einen Sensors und der Liste der zur Bezahlung vorgesehenen Artikel. Der Validierungsschritt wird in einer Auswerteeinrichtung ausgeführt. Insbesondere heißt das, dass die Daten des Sensors verglichen werden mit der Liste von Artikeln, die dem Produktscanner zugeordnet ist. Werden aufgrund der Daten des Sensors Unstimmigkeiten erkannt, so werden die Artikel nicht validiert. Um die Erkennung der Artikel aufgrund der Daten des Sensors zu erleichtern und prozesssicherer zu machen, legt die Auswerteeinrichtung die Liste der zur Bezahlung vorgesehenen Artikel zugrunde. Hintergrund hierfür ist, dass nur Artikel, die auf der Liste der zur Bezahlung vorgesehenen Artikel sind und somit aus einem Regal herausgenommen wurden, für einen Bezahlvorgang in Frage kommen. Somit können keine anderen Artikel als diese durch den Sensor erkannt worden sein.

Der Fachmann versteht, dass die Auswerteeinrichtung nicht notwendigerweise ein einzelnes Modul oder Bauteil ist. So können Teile der Auswerteeinrichtung zum Beispiel in einer Verkaufsvorrichtung untergebracht sein und andere Teile der Auswerteeinrichtung können zum Beispiel in einem Netzwerk oder einer Computing Cloud untergebracht sein. Die Auswerteeinrichtung ist vielmehr als zusammenwirkendes System zu verstehen, das aus mehreren einzelnen und gegebenenfalls verteilt angeordneten Teilen besteht.

In einer Ausführungsform umfasst das Verfahren für den Fall, dass im Validierungsschritt Artikel nicht validiert werden konnten, die Schritte:

- Anzeigen auf einer Ein-/Ausgabeeinheit der Verkaufsvorrichtung mindestens eines Teils der Liste der zur Bezahlung vorgesehenen Artikel.
- Empfangen weiterer Artikel, die für einen Bezahlvorgang vorgesehen sind, über die der Ein-/Ausgabeeinheit. Das heißt, ein Kunde hat die Möglichkeit, über die Ein-/Ausgabeeinheit weitere Artikel einzugeben bzw. auszuwählen. Diese Artikel werden von der Verkaufsvorrichtung durch eine Interaktion mit dem Kunden empfangen. In einer Ausführungsform ist dabei die Ein-/Ausgabeeinheit für den Schritt des Anzeigens und/oder Empfangens ein Touchscreen eines Smartphones, auf dem eine entsprechende App läuft. In einer Ausführungsform ist das Smartphone ebenfalls der Produktscanner.

In einer Ausführungsform werden beim Anzeigen mindestens eines Teils der Liste, der zur Bezahlung vorgesehenen Artikel, auf der Ein-/Ausgabeeinheit der Verkaufsvorrichtung nur die Artikel oder ein Teil der Artikel angezeigt, die nicht auf einer der den Produktscannern zugeordneten Listen sind. Die meisten Artikel in einem Ladengeschäft, die aus den Regalen entnommen werden, werden von den Kunden mit ihren jeweiligen Produktscannern eingescannt. Diese Artikel sollen dann nicht angezeigt werden. Es werden nur die Artikel auf der Ein-/Ausgabevorrichtung angezeigt, die aus den Regalen entnommen wurden und nicht von einem Kunden mit dem Produktscanner eingescannt wurden. Das sind sehr wenige Artikel. Im Normalbetrieb werden die Kunden die meisten Artikel einscannen und nur wenige vergessen. Insofern ist die Liste der für einen Kunden zur manuellen Auswahl verbleibenden Artikel, für den Fall, dass der Validierungsprozess fehlgeschlagen ist, sehr überschaubar. Dies bedeutet einen erhöhten Bedienkomfort und eine reduzierte Fehleranfälligkeit des Systems.

Bei einem Validierungsverfahren in Self-Checkout Vorrichtungen werden Erkennungsverfahren genutzt, um die Artikel zu erkennen und die Liste der eingescannten Artikel zu überprüfen. Insbesondere, wenn festgestellt wird, dass Artikel vorhanden sind, die nicht auf der Liste der eingescannten Artikel sind, sollten im Idealfall diese Artikel erkannt werden, so dass dem Nutzer der fehlende Artikel gleich vorgeschlagen werden können. Das Verfahren erlaubt eine Erkennung dieser Artikel.

In einer Ausführungsform ist der mindestens eine Sensor mindestens eine Kamera. Insbesondere handelt es sich dabei um mindestens eine CCD Kamera. In einer Ausführungsform sind die Daten des mindestens einen Sensors Bilddaten. In einer Ausführungsform ist der mindestens eine Sensor eine Wägezelle. In einer Ausführungsform sind die Daten des mindestens einen Sensors Gewichtsdaten.

In einer Ausführungsform umfasst der Schritt des Validierens der dem Produktscanner zugeordneten Liste mit Artikeln den Schritt:

- Anwenden eines Verfahrens zur Objekterkennung in der Auswerteeinrichtung. Das Verfahren zur Objekterkennung erkennt in den Daten des mindestens einen Sensors objektbeschreibende Attribute. Diese objektbeschreibenden Attribute werden mit objektbeschreibenden Attributen von Artikeln vergleichen, die in der Liste der zur Bezahlung vorgesehenen Artikel sind. Das hat den Vorteil, dass das Verfahren zur Objekterkennung als mögliche Lösungen nur Lösungen zulässt, das heißt nur Artikel detektieren kann, die aus einem Regal genommen wurden. Diese Artikel müssen folglich noch bezahlt werden. Artikel, die nicht aus dem Regal genommen wurden, sind zwar noch im Ladengeschäft im Sortiment vorhanden, aber aktuell soll es für diese Artikel keinen Bezahlvorgang geben. Deswegen können diese Artikel von dem Verfahren zur Objekterkennung in den Daten des Sensors auch nicht erkannt werden. In einer Ausführungsform ist das Verfahren zur Objekterkennung ein optisches Verfahren und wird auf Bilddaten eines Einkaufskorbes oder eines Einkaufswagens angewendet. Das optische Verfahren basiert in einer Ausführungsform auf Kantenerkennung, Transformationen, Größen und/oder Farberkennung.

In einer Ausführungsform führt mindestens ein Regal mit automatischer Entnahmeüberwachung zum Detektieren des entnommenen Artikels folgende Schritte ausführt:

- Empfangen eines Signals von mindestens zwei, vorzugsweise drei oder vier Wägezellen, die in den Ecken eines starren Körpers, der einen Auslagebereich mit mindestens zwei Produktbereichen bildet, angeordnet sind. Das heißt, der Auslagebereich eines Regals ist auf mehreren Wägezellen abgestützt. Die Wägezellen ermitteln die Gewichtskraft des Auslagebereichs und der Artikel, die auf dem Auslagebereich stehen. Die Signale der Wägezellen entsprechen den Gewichtskräften im Bereich der Ecken des starren Körpers.
- Ermitteln von Schwerpunktkoordinaten und einer Gesamtgewichtskraft aus den empfangenen Signalen. Diese werden mit einer Auswerteeinheit aus den Signalen der Wägezellen ermittelt.
- Empfangen eines Signals, das einer neuen Gewichtskraft entspricht, von mindestens einer Wägezelle und ermitteln mit der Auswerteeinheit neuer Schwerpunktkoordinaten aus den von den Wägezellen aktuell empfangenen Daten.
- Ermitteln eines Produktbereichs und eines Gewichts der aus dem Produktbereich entnommenen Artikel.
- Bestimmen der Artikeldaten des aus dem Regal entnommenen Artikels aufgrund des ermittelten Produktbereichs und bestimmen der Anzahl der entnommenen Artikel aufgrund des dem Produktbereichs entnommenen Gewichts und des spezifischen Gewichts des Artikels.

In einer Ausführungsform wird der Auslagebereich durch einen Regalfachboden gebildet, zum Beispiel durch ein Regalbrett oder ein Gitterboden eines Regalfachs.

Mit den Schwerpunktkoordinaten kann der Bereich auf einem starren Körper ermittelt werden, von dem ein Gegenstand entnommen wurde. Bei Regalen ist es oft der Fall, dass ein starres Regalbrett von einem Gestell getragen wird. Auf dem Regalbrett sind mehrere Fächer für verschiedene Artikel vorgesehen. Mit Hilfe von mehreren Wägezellen, die vorzugsweise an den Ecken des starren Körpers angebracht sind, kann über die Ermittlung der Schwerpunktkoordinaten der Bereich auf dem starren Körper und somit der Produktbereich und somit auch ein zugeordneter Artikel ermittelt werden. Mit Hilfe des Gesamtgewichts der entnommenen Artikel lässt sich die Anzahl der aus dem Produktbereich entnommenen Artikel festgesellen.

In einer Ausführungsform ermittelt die Auswerteeinheit bei einer Änderung des Gesamtgewichts einen Vektor zwischen den vorhergehenden Schwerpunktkoordinaten und den neuen Schwerpunktkoordinaten. Der von einer Steuereinrichtung bestimmte Regalbereich wird aus dem Vektor und dem Gesamtgewicht von der Steuereinrichtung ermittelt.

In einer Ausführungsform tariert die Auswerteeinheit alle Wägevorrichtungen periodisch und gleichzeitig. Die aus den Daten der Wägevorrichtungen gebildeten Schwerpunktskoordinaten bilden den Schwerpunkt ab, an dem etwas aus dem Regalfachboden entnommen oder zugefügt wurde. In einer Ausführungsform bildet die Auswerteeinheit zur Ermittlung der neuen Schwerpunktskoordinaten für jede Wägevorrichtung die Differenz aus einem neuen Gewichtswert und einem vorhergehenden Gewichtswert. Das heißt, bei einer Entnahme eines Produkts aus dem Regalfachboden wird die Gewichtsänderung an jeder Wägevorrichtung separat ermittelt. Aus den vier Differenzwerten, das heißt, aus der Gewichtsänderung an jeder Wägevorrichtung, werden die neuen Schwerpunktskoordinaten ermittelt. Beide Ausführungsformen führen dazu, dass die gemessenen Gewichtswerte der vier Wägevorrichtungen separat betrachtet werden und nicht ein Vektor berechnet wird, der skaliert werden muss. Somit sind diese beiden Ausführungsformen weniger sensitiv gegenüber Toleranzen bei der Gewichtswertbestimmung durch die Wägevorrichtungen.

In einer Ausführungsform umfasst das Verfahren folgende Schritte:

- Im Fall, dass im Validierungsschritt die Artikel validiert werden konnten, ermitteln eines Gesamtpreises für einen Bezahlvorgang aus der Summe aller Einzelpreise der Artikel, die auf der dem Produktscanner zugeordneten Liste von Artikeln sind.
- Ausführen eines Bezahlvorgang über ein Mobile Payment Verfahren, eine EC-Karte oder Kreditkarte oder über eine Barzahl-Vorgang.

Erfindungsgemäß wird eine Verkaufsvorrichtung zum Selbst-Checkout von Waren in einem Ladengeschäft, insbesondere in einem Supermarkt vorgeschlagen. Das Ladengeschäft umfasst mindestens ein Regal mit automatischer Entnahmeüberwachung und ein Netzwerk zum Austausch von Daten. Die Verkaufsvorrichtung umfasst eine Steuervorrichtung zur Steuerung der Verkaufsvorrichtung und eine Kommunikationseinheit zum Empfangen von Daten aus dem Netzwerk sowie eine Datenbank zum Speichern von Artikeldaten und zu den Artikeln dazugehörigen objektbeschreibenden Attributen. Die Steuervorrichtung ist ausgelegt, über das Netzwerk von dem mindestens einen Regal mit automatischer Entnahmeüberwachung Artikeldaten von entnommenen Artikeln zu empfangen. Die Steuervorrichtung ist ausgelegt, daraus eine Liste der zu bezahlenden Artikel zu ermitteln. Die Steuervorrichtung ist ausgelegt, über das Netzwerk von dem mindestens einen Produktscanner Artikelnummern zu empfangen. Die Steuervorrichtung ermittelt daraus eine dem Produktscanner zugeordnete Liste von Artikeln. Die Verkaufsvorrichtung weist eine Vorrichtung zum Identifizieren des Produktscanners auf. Die

Verkaufsvorrichtung umfasst mindestens einen Sensor zum Erheben von Daten über Artikel in einem Einkaufswagen oder in einem Einkaufskorb, welcher auf einer Auflageplatte der Verkaufsvorrichtung steht. Die Verkaufsvorrichtung umfasst eine Auswerteeinrichtung, die eine dem Produktscanner zugeordnete Liste mit Artikeln aufgrund der Daten des Sensors und der Liste der zur Bezahlung vorgesehenen Artikel validiert.

In einer Ausführungsform erkennt die Auswerteeinrichtung aus den Daten des mindestens einen Sensors objektbeschreibende Attribute. Diese objektbeschreibenden Attribute werden mit objektbeschreibenden Attributen von Artikeln verglichen, die in der Liste der dem Produktscanner zugeordneten Artikel sind.

In einer Ausführungsform ist die Verkaufsvorrichtung ein Teil eines Verbundes von mehreren Verkaufsvorrichtungen in dem Ladengeschäft. Die Datenbank ist eine gemeinsame Datenbank für alle Verkaufsvorrichtungen des Verbundes von mehreren Verkaufsvorrichtungen. Die Verkaufsvorrichtungen sind über ein Netzwerk mit der Datenbank verbunden.

In einer Ausführungsform befinden sich zumindest Teile der Steuervorrichtung, der Auswerteeinrichtung und/oder der Datenbank außerhalb des Ladengeschäfts, insbesondere auf einem Server oder in einem Cloud-Netzwerk. Die Verkaufsvorrichtung greift über ein Netzwerk auf diese Teile der Steuervorrichtung, der Auswerteeinrichtung und/oder der Datenbank zu.

In einer Ausführungsform umfasst das Verfahren zum Betrieb der Verkaufsvorrichtung den Schritt:

-   Zurücksetzten, zu einem Zeitpunkt, insbesondere bei Öffnung des Ladengeschäfts am Morgen der Liste mit den zur Bezahlung vorgesehen Artikeln.

Das heißt, zu diesem Zeitpunkt werden alle Artikel, die zur Bezahlung vorgesehen sind, aber noch nicht bezahlt wurden, aus der Liste gelöscht. Dies kann zum Beispiel kurz vor Öffnung des Ladengeschäfts am Morgen sein. Andererseits kann zum Beispiel ein Mitarbeiter diesen Zeitpunkt manuell auswählen und die Liste manuell löschen, wenn er sieht, dass sich keine Kunden im Ladengeschäft aufhalten. Zu dem Zeitpunkt, an dem zum Beispiel kein Kunde im Ladengeschäft ist, dürfen auch keine Artikel auf der Liste der zur Bezahlung vorgesehen Artikel vermerkt sein. Sind dennoch Artikel auf der Liste, so ist beim Verkaufsvorgang ein Fehler passiert. Entweder wurden die Artikel beim Bezahlvorgang nicht korrekt abgerechnet, der Kunde hat ein Artikel aus dem Regal genommen und ihn an einer anderen Stelle im Ladengeschäft abgelegt oder die Entnahme des Artikels aus dem Regal mit automatischer Entnahmeüberwachung ist falsch detektiert worden. Das Löschen der Liste gleicht einem Reset des Systems, so dass sich die fehlerhaften Einträge nicht auf Dauer in der Liste ansammeln und die Performance des Systems beeinträchtigen. Die Information, wieviel Artikel auf der Liste der zur Bezahlung vorgesehenen Artikel gelöscht werden müssen, gibt auch wieder, wie viele Artikel zum Beispiel durch Diebstahl unerlaubt entwendet wurden.

Einige Ausführungsformen der Erfindung sind in den Zeichnungen beispielhaft gezeigt und nachfolgend beschrieben. Es zeigen, jeweils in schematischer Darstellung:

Fig. 1    ein System zum Selbst-Checkout in einem Ladengeschäft,
Fig. 2    eine Verkaufsvorrichtung in eine ersten Ausführungsform,
Fig. 3    eine Verkaufsvorrichtung in einer zweiten Ausführungsform,
Fig. 4    eine Regalkonsole mit zwei Wägevorrichtungen,
Fig. 5    ein Blockdiagramm eines Regals,
Fig. 6    ein Verfahren zum Betrieb eines Regals,
Fig. 7    ein erstes Verfahren zur Bestimmung eines Ortes auf dem Regalfachboden, an dem ein Produkt entnommen oder zugefügt wurde,
Fig. 8    ein zweites Verfahren zur Bestimmung eines Ortes auf dem Regalfachboden, an dem ein Produkt entnommen oder zugefügt wurde,
Fig. 9    ein drittes Verfahren zur Bestimmung eines Ortes auf dem Regalfachboden, an dem ein Produkt entnommen oder zugefügt wurde, und
Fig. 10   ein Verfahren zum Selbst-Checkout in einem Ladengeschäft.

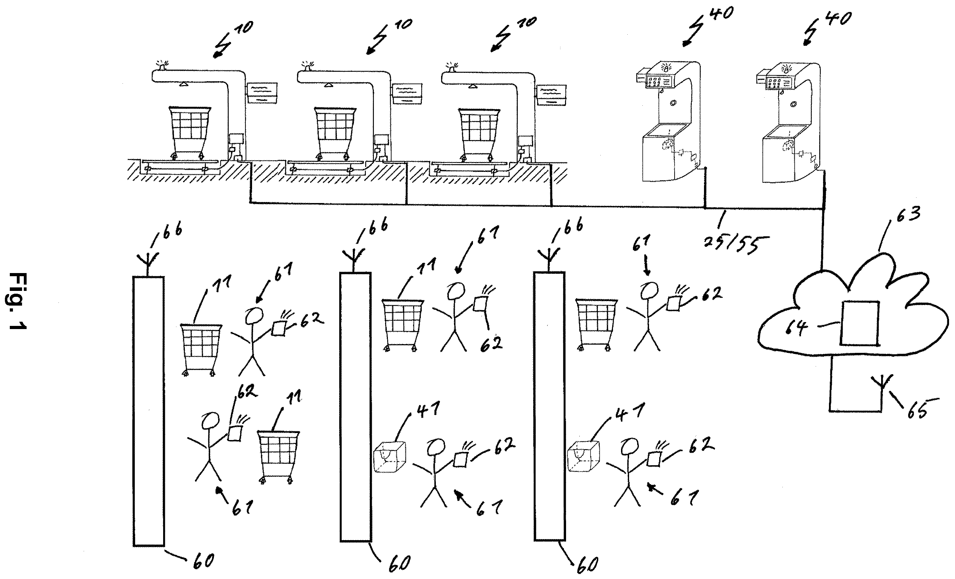

Fig. 1 zeigt ein System zum Selbst-Checkout in einem Ladengeschäft. Im Ladengeschäft sind eine Vielzahl von Kunden 61 vorhanden, die beim Selbst-Checkout an den Verkaufsvorrichtungen 10, 40 selbst zu Bedienern werden.

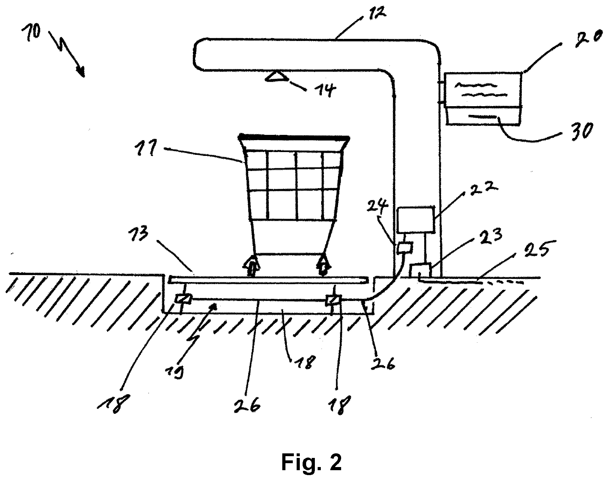

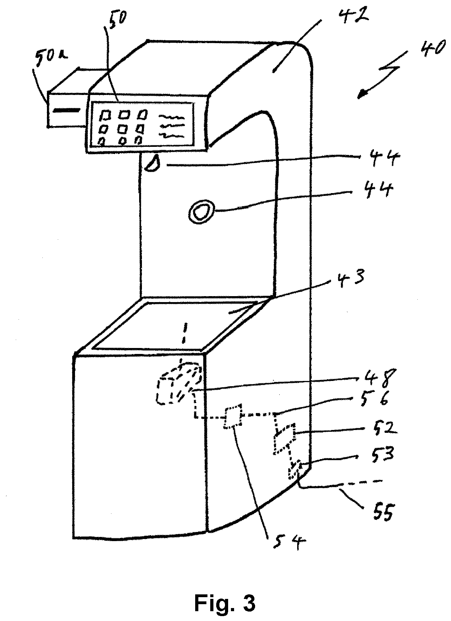

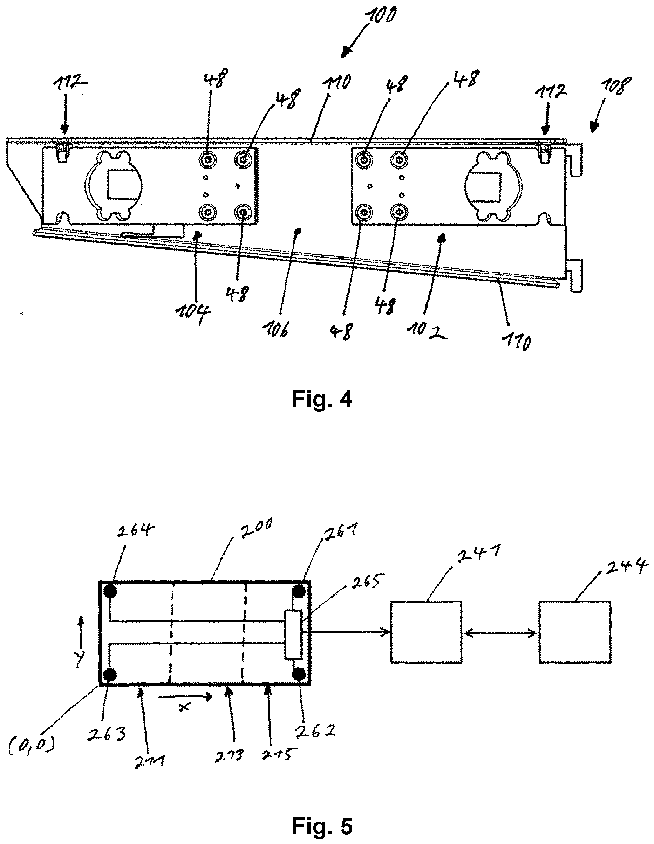

Die Kunden 61 gehen mit einem Einkaufswagen 11 oder einem Einkaufskorb 41 an die Regale 60, um entsprechende Produkte zu entnehmen und sie in ihren Einkaufswagen 11 oder Einkaufskorb 41 zu legen. Dabei scannen die Kunden 61 mit einem Produktscanner 62 die Artikel, die sie aus den Regalen nehmen. Der Produktscanner ist zum Beispiel ein Smartphone mit einer entsprechenden App. Das Smartphone erkennt mit der Kamera einen Barcode, der sich auf den Artikeln befindet. Das ist die Artikelnummer. Das Smartphone ist über ein drahtloses Netzwerk, zum Beispiel ein Mobilfunknetz oder ein WLAN mit einer Computing Cloud 63 verbunden, in der sich eine Steuervorrichtung 64 befindet. Die Steuervorrichtung empfängt die Artikelnummer von dem Produktscanner 62. Das Ladengeschäft umfasst eine oder mehrere Verkaufsvorrichtungen 10, die für einen Selbst-Checkout mit einem Einkaufswagen 11 geeignet sind und im Detail in Fig. 2 gezeigt sind. Das Ladengeschäft umfasst alternativ oder zusätzlich eine oder mehrere Verkaufsvorrichtungen 40, die für den Selbst-Checkout mit einem Einkaufskorb 41 geeignet sind und die im Detail in Fig. 3 gezeigt sind. Die Verkaufsvorrichtungen 10, 40 sind über ein Netzwerk 25, 55 mit der Computing Cloud 63 verbunden. Die Computing Cloud 63 umfasst eine Steuervorrichtung 64, die von den Verkaufsvorrichtung 10, 40 über das Netzwerk 25, 55 Bilder und Gewichtswerte von einem Einkaufswagen 11 oder einem Einkaufskorb 41 übermittelt bekommt. Die Regale 60 sind mit einer automatischen Entnahmeüberwachung ausgerüstet, deren Funktion mit Bezug zu den Zeichnungen Fig. 4 bis Fig. 9 detailliert beschrieben ist. Entnimmt ein Kunde ein Produkt aus dem Regal, so übermittelt das Regal mit einer Kommunikationsvorrichtung 66 die Artikeldaten und die Anzahl der entnommenen Artikel an die Computing Cloud 63. Die Kommunikation findet zum Beispiel über ein drahtloses Netzwerk 65 (wie in Fig. 1 angedeutet), insbesondere ein öffentliches Mobilfunknetz oder ein WLAN des Ladengeschäfts oder ein (in Fig. 1 nicht gezeigtes) drahtgebundenes Netzwerk, insbesondere ein LAN, statt. In einer Ausführungsform umfasst das Computing Cloud 63 eine Steuervorrichtung 64. In einer Ausführungsform ist das Netzwerk 63 eine Computing Cloud, das heißt ein Cloud Netzwerk, in der die Funktion der Steuervorrichtung 64 realisiert ist. In einer Ausführungsform ist anstelle der Computing Cloud 63 ein Netzwerk vorgesehen, das ausschließlich zur Datenübertragung vorgesehen ist und die Steuervorrichtung ist in einer oder in allen der Verkaufsvorrichtungen 10, 40 vorgesehen. In einer Ausführungsform ist die Steuervorrichtung 64 ein Server in einem Netzwerk 25, 55, 66, 63, 65, wobei das Netzwerk 25, 55, 66, 63, 65 Server 64, Regale 60 und Verkaufsvorrichtungen 10, 40 verbindet.

Fig. 2 zeigt eine Verkaufsvorrichtung 10 in einer ersten Ausführungsform. Die Verkaufsvorrichtung 10 umfasst ein Gestell 12 unter das ein Einkaufswagen 11 geschoben werden kann. Der Einkaufswagen 11 hat eine definierte Position (Ruheposition) unter dem Gestell 12 auf einer Auflageplatte 13. Die Auflageplatte 13 ist eine Lastplatte einer Waage und mit der Krafteinleitungsseite einer oder mehrerer Wägezellen 18 mechanisch verbunden. Die Waage bestimmt das Gesamtgewicht des Einkaufswagens 11 mit seinem Inhalt. Das Gestell 12 umfasst weiter mindestens eine Kamera 14, die zum Erstellen von mindestens einem Bild einer Ansicht einer offenen Seite des Einkaufswagens 11 ausgebildet ist. Bei einem Einkaufswagen 11 ist normalerweise die obere Seite offen. Eine offene Seite im Sinne dieser Offenbarung ist jedoch auch zum Beispiel ein Seitenteil des Einkaufswagens, dass aus transparentem Material besteht. Im Rahmen der Erfindung soll als offene Seite ebenfalls gelten, wenn der Einkaufswagen aus einem grobmaschigen Metallgitter besteht, durch das hindurch eine Bildaufnahme des Inhalts des Einkaufswagens gemacht werden kann. Nicht als offene Seite ist im Rahmen dieser Offenbarung zu verstehen, wenn die Seite eines Einkaufswagens aus nicht transparentem Kunststoff besteht oder durch eine nicht transparente Werbetafel verdeckt ist.

Die mindestens eine Wägezelle 18, insbesondere vier Wägezellen 18, ist mit einer Gewichtswertverarbeitungsvorrichtung 24 verbunden, die aus den Signalen der Wägezelle 18 oder der Wägezellen 18 einen Gewichtswert des Einkaufswagens 11 ermittelt. Die Gewichtswertverarbeitungsvorrichtung 24 umfasst einen Gewichtswertspeicher zum Speichern des Gewichtswertes.

Die mindestens eine Kamera 14 und die Gewichtswertverarbeitungsvorrichtung 24 sind mit einer Steuerung 22 verbunden und übergeben die ermittelten Daten an die Steuerung 22. Die Steuerung 22 ist mit einer Kommunikationsvorrichtung 23 verbunden, über die die Steuerung 22 Daten wie Bilder und Gewicht an ein Netzwerk 25 übermittelt und mindestens einen Verkaufspreis und eine Auflistung der Artikel im Einkaufswagen 11 vom Netzwerk 25 empfängt. Die Verkaufsvorrichtung umfasst eine Ein-/Ausgabeeinheit 20, mit der ein Bediener mit der Verkaufsvorrichtung 10 interagieren kann. Die Ein-/Ausgabeeinheit 20 umfasst ebenfalls eine Bezahleinheit 30, an der vorzugsweise bargeldlos bezahlt werden kann. Die Ein-/Ausgabeeinheit 20 zeigt die vom Netzwerk 25 empfangen Daten, insbesondere die Artikel im Einkaufswagen 11 und deren Preis an und leitet den Bediener durch einen Bezahlvorgang mit der Bezahleinheit 30. Nach der Bezahlung der Artikel gibt die Ein-/Ausgabeeinheit 20 dem Bediener einen entsprechenden Hinweis aus, dass er das Ladengeschäft mit seinen Einkäufen verlassen kann. Optional umfasst die Ein-/Ausgabeeinheit 20 einen Drucker, um dem Bediener einen Bon über den abgeschlossenen Kauf auszudrucken. Nachdem der Bediener die Artikel im Einkaufswaagen 11 bezahlt hat, sendet die Steuerung 22 über das Netzwerk eine Nachricht, dass diese Artikel bezahlt wurden. Diese Nachricht wird in der sich im Netzwerk 63 befindlichen Steuervorrichtung 64 dazu benutzt, um die bezahlten Artikel von der Liste der zur Bezahlung vorgesehenen Artikel zu streichen, wie folgend noch detaillierter erläutert wird. Ebenfalls wird diese nachrichtig genutzt, um in der Steuervorrichtung die Liste der dem Produktscanner 62 zugeordneten Artikel zu löschen.

Fig. 3 zeigt eine Verkaufsvorrichtung 40 in einer zweiten Ausführungsform. Diese Ausführung ist geeignet, um den Inhalt eines Einkaufskorbes 41 zu detektieren und abzurechnen. Ein Gestell 42 ist derart ausgebildet, dass es eine Auflage für den Einkaufskorb 41 bildet, die sich nicht auf dem Boden, sondern auf einer für den Bediener ergonomischen Höhe befindet. Das Gestell 42 umfasst einen oberen Teil, der über den abgestellten Einkaufskorb 41 ragt. Im Gestell ist eine Auflageplatte 43 ausgebildet, auf der der Einkaufskorb 41 mit seiner Unterseite abgestellt werden kann. Das Gestell 42 haltert mindestens eine Kamera 44, die derart positioniert ist, dass sie von einer offenen Seite des Einkaufskorbes 41 ein Bild des Inhalts des Einkaufskorb 41 machen kann.

Die Verkaufsvorrichtung 40 umfasst eine Waage. Eine Auflageplatte 43 bildet die Lastplatte der Waage und ist mechanisch mit der Krafteinleitungsseite einer im Gestell 42 untergebrachten Wägezelle 48 verbunden. Die Wägezelle 48 ist mit einer Gewichtswertverarbeitungsvorrichtung 54 verbunden, die aus den Signalen der Wägezelle 48 einen Gewichtswert des Einkaufskorbes 41 ermittelt und in einem Gewichtswertspeicher speichert. Auch in dieser Ausführungsform kann die Auflageplatte 43 von mehreren Wägezellen 48 gehalten sein. Da ein Einkaufskorb 41 nicht so schwer und nicht so groß ist wie ein Einkaufswagen 11 und die Auflageplatte 43 dementsprechend kleiner ausgestaltet ist als in der ersten Ausführungsform, ist eine Wägezelle 48 zur Gewichtsbestimmung in einer bevorzugten Ausführungsform ausreichend. Die Gewichtswertverarbeitungsvorrichtung 54 gibt denn Gewichtswert an eine Steuerung 52 weiter, die ihrerseits mit einer Kommunikationsvorrichtung 53 verbunden ist. Die Steuerung 52 steuert die Abläufe in der Verkaufsvorrichtung 40. Die Kommunikationsvorrichtung 53 ist mit einem Netzwerk 55 verbunden. Die von der Steuerung 52 vorgegebenen Abläufe und die durch die Kommunikationsvorrichtung 53 über das Netzwerk 55 übermittelten Daten sind analog zum ersten Ausführungsbeispiel. Der obere Teil des Gestells 42 umfasst eine Ein-/Ausgabeeinheit 50. Die Ein-/Ausgabeeinheit 50 kann in den Rahmen des Gestells 42 integriert sein und ist zum Beispiel ein Touchscreen. An dem Gestell ist eine Bezahleinheit 50a angebracht. Die Bezahleinheit 50a kann auch in die Ein-/Ausgabeeinheit 50 integriert sein. Die Bezahleinheit 50a dient dem bargeldlosen Bezahlen an der Verkaufsvorrichtung 40.

Fig. 4 zeigt eine Regalkonsole 100 in einer Seitenansicht auf die Innenseite. Die Regalkonsole 100 besteht aus einem sich in horizontaler Richtung erstreckenden Ausleger 106, der aus einem vertikal angeordneten Blech gebildet ist. Um die Stabilität zu erhöhen, weist der Ausleger 106 an seiner Oberseite und an seiner Unterseite eine Versteifungsrippe 110 auf. Die Versteifungsrippe ist realisiert durch eine Biegung des Blechs um 90°. Die Regalkonsole 100 umfasst an einem axialen Ende des Auslegers 106 eine Verankerungsvorrichtung 108 in der Form von zwei Haken, mit der die Regalkonsole in einer Regalschiene befestigt werden kann. Regalschienen sind oft als vertikal angebrachte Schienen mit übereinander angeordneten Schlitzen ausgebildet, so dass die Regalkonsolen auf verschiedenen Höhen an der Regalschiene befestigt werden können. Zwei Regalkonsolen 100, die an zwei beabstandeten Regalschienen auf gleicher Höhe angebracht sind, tragen einen Regalfachboden und bilden so ein Regalfach. Der Ausleger 106 ist dreieckförmig ausgebildet, das heißt, im Bereich der Verankerungsvorrichtung 108 ist die Höhe des Auslegers größer als am gegenüberliegenden axialen Ende, das dem vorderen Bereich des Regalfachs entspricht. Der Ausleger umfasst ferner zwei Wägevorrichtungen 102, 104, wobei eine Wägevorrichtung 102 im Bereich der Verankerungsvorrichtung 108 und eine Wägevorrichtung 104 im Bereich des anderen axialen Endes des Auslegers 106 angebracht ist. Die Wägevorrichtungen 102, 104 sind mit Schrauben 48 am Ausleger 106 befestigt. Jede Wägevorrichtung 102, 104 umfasst einen

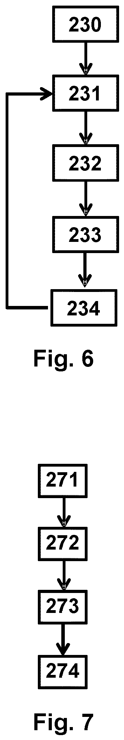

Krafteinleitungsabschnitt 112 mit einem Aufnahmeelement, das eine Aufnahme aufweist. In die Aufnahme kann eine Strebe eines Regalfachbodens eingebracht werden, so dass die Krafteinleitungsabschnitte der Wägevorrichtungen 102, 104 über dessen Streben den Regalfachboden stützen und halten. Dabei ist das Aufnahmeelement von oben frei zugänglich, so dass der Regalfachboden ausschließlich über die Krafteinleitungsabschnitte 112 der Wägevorrichtungen 102, 104 gestützt wird. Jeder Wägevorrichtung 102, 104 ist eine Leiterplatte zugeordnet, mit darauf angeordneter Elektronik, insbesondere eines Analog-Digital-Wandlers zur Verarbeitung wenigstens eines Ausgangssignals eines Dehnungsmessstreifens der Wägevorrichtungen 102, 104. Das Gewicht des Regalfachbodens sowie der Artikel, die auf dem Regalfachboden abgestellt sind, wird mit den Wägevorrichtungen 102, 104 gemessen. Aus den Gewichtswerten und insbesondere der Veränderung der Gewichtswerte der vier Wägevorrichtungen 102, 104 wird, wie in der Beschreibung mit Bezug zu Fig. 6 gezeigt, berechnet, an welcher Stelle auf dem Regalfachboden ein Artikel entnommen wird. So kann der entnommene Artikel identifiziert werden. Dies entspricht einer Entnahmeüberwachung des Regals.

In Fig. 4 ist eine Regalkonsole 100 gezeigt, die von vorne betrachtet die linke Regalkonsole eines Regalfachs bildet. Ebenso muss ein Regalfach eine rechte Regalkonsole umfassen, so dass der Regalfachboden auf der linken Seite von der linken Regalkonsole und auf der rechten Seite von der rechten Regalkonsole getragen wird. Linke Regalkonsole, rechte Regalkonsole und Regalfachboden bilden zusammen ein Regalfach, auf dem Artikel abgestellt und entnommen werden können. Auf die Darstellung der rechten Regalkonsole ist verzichtet. Die rechte Regalkonsole ist spiegelsymmetrisch zur linken Regalkonsole aufgebaut.

Fig. 5 zeigt schematisch drei Regalbereiche 211, 213, 215 auf einem Regalfachboden 200 und entsprechende Komponenten zur Entnahmeüberwachung. Die Bestimmung des Regalbereichs 211, 213, 215 aus dem ein Produkt aus dem Regalfachboden 200 entnommen wurde, erfolgt mittels Schwerpunktermittlung des Regalfachbodens 200.

Der Regalfachboden 200 wird von den vier Wägevorrichtungen 261, 262, 263, 264 schwebend gehaltert. Dabei handelt es sich um die Wägevorrichtungen 102, 104, die in die Regalkonsolen 100 integriert sind. Dabei stützen eine Regalkonsole 100 links des Regalfachbodens 200 und eine Regalkonsole 100 rechts des Regalfachbodens 200 den Regalfachboden 200. Die Wägevorrichtungen 261, 262, 263, 264 stützen mit ihren Krafteinleitungsabschnitten den Regalfachboden 200 an den Enden seiner Streben. Die Wägevorrichtungen 261, 262, 263, 264 bestimmen unabhängig voneinander eine wirkende Gewichtskraft, die durch den Regalfachboden 200 und der in den Regalbereichen 211, 213, 215 abgelegten Artikel entsteht. Dabei wirkt auf jede Wägevorrichtungen 261, 262, 263, 264 anteilig von dem Gesamtgewicht eine einzelne Gewichtskraft. Die Daten aus den Wägevorrichtungen 261, 262, 263, 264 werden an eine Auswerteinheit 265 übermittelt. Die Auswerteeinheit 265 bestimmt aus den einzelnen Gewichtsdaten der Wägevorrichtungen 261, 262, 263, 264 Schwerpunktkoordinaten des Regalfachbodens 200. Die Koordinaten im Regalbereich 211, 213, 215 beginnen in einer Ecke bei der Wägevorrichtung 263 mit den Koordinaten (0, 0) und erstrecken sich in waagrechter Richtung X und in senkrechter Richtung Y.

Zur Veranschaulichung der Schwerpunktsermittlung werden den Wägevorrichtungen 261, 262, 263, 264 wie in Fig. 5 dargestellt die entsprechenden Gewichtsdaten W261, W262, W263, W264 zugewiesen.

Die Bildung des Schwerpunkts in X Richtung bestimmt sich wie folgt:

$$(W261 + W262) / (W261 + W262 + W263 + W264)$$

Die Bildung des Schwerpunkts in Y Richtung bestimmt sich wie folgt:

$$(W261 + W264) / (W261 + W262 + W263 + W264)$$

Mit einem entsprechenden Normierungsfaktor, der die Größe des Regalfachbodens 200 berücksichtigt, sind Koordinaten in dem Regalbereich 211, 213, 215 bestimmbar, die den Schwerpunktkoordinaten des Regalfachbodens 200 entsprechen. Diese Koordinaten werden in der Auswerteeinheit 265 auf Basis der Daten der Wägevorrichtungen 261, 262, 263, 264 ermittelt. Des Weiteren bildet die Auswerteeinheit 265 ein Gesamtgewicht W261 + W262 + W263 + W264. Die Schwerpunktkoordinaten und das Gesamtgewicht werden von der Auswerteeinheit 265 an eine Steuereinrichtung 241 übermittelt. Das Regal umfasst einen Speicher 244, in dem eine Zuordnung zwischen Schwerpunktkoordinaten und Regalbereichen 211, 213, 215 abgelegt ist. Im Speicher 244 ist des Weiteren für jeden Regalbereich 211, 213, 215 das durchschnittliche Gewicht eines Stücks eines Artikels in diesem Regalbereich 211, 213, 215 abgelegt. Mit dieser Anordnung sind neben den in Fig. 5 gezeigten Regalbereichen 211, 213, 215, die nebeneinander in X Richtung angeordnet sind, auch Regalbereiche zu ermitteln, die in X und Y Richtung in Reihen und Spalten, also in einer Matrix, angeordnet sind.

Fig. 6 zeigt ein Verfahren zur automatischen Entnahmeüberwachung in einem Regal 60, das durch eine Steuereinrichtung 241 ausgeführt wird. In Schritt 230 werden die Regalbereiche 211, 213, 215 des Regalfachbodens 200 mit Artikeln bestückt. Dabei wird im Speicher 244 jedem Regalbereich 211, 213, 215 die Artikel zugewiesen und ein Gewicht pro Stück abgespeichert. Des Weiteren sind im Speicher 244 die X und Y Koordinaten jedes Regalbereichs 211, 213, 215 hinterlegt. Diese müssen nicht bei jedem Befüllen neu hinterlegt werden, da sie sich nicht ändern. Wird jedoch die Größe der Regalbereiche 211, 213, 215 und deren Anordnung durch eine Neuanordnung der Zwischenwände geändert, so muss im Speicher 244 die Zuordnung zwischen X und Y Koordinaten und Regalbereichen 211, 213, 215 aktualisiert werden. Somit ist im Speicher 244 hinterlegt, über welche X und Y Koordinaten sich jeder Regalbereich 211, 213, 215 erstreckt. In Schritt 231 wird mittels einer Auswerteeinheit 265 aus den Gewichtswerten der Wägevorrichtungen 261, 262, 263, 264 ein Ort bestimmt, an dem ein Artikel oder mehrere Artikel entnommen wurden und das Gesamtgewicht der entnommenen Artikel bestimmt. Die Bestimmung in Schritt 231 kann mit drei alternativen Verfahren ausgeführt werden, die mit Bezug zu Fig. 7 bis Fig. 9 im Folgenden beschrieben sind. In Schritt 232 wird mit der Steuereinrichtung 241 aufgrund der Koordinaten des Orts, an dem etwas entnommen wurde und mithilfe der Information aus dem Speicher 244 über die Anordnung der Regalbereiche 211, 213, 215 der zugehörige Regalbereich 211, 213, 215 bestimmt. In Schritt 233 wird aus dem bestimmten Gesamtgewicht der entnommenen Artikel und dem im Speicher 244 dem Regalbereich 211, 213, 215 zugeordneten Gewichtswert für einen Artikel die Anzahl der Artikel bestimmt, die aus dem Regalbereich 211, 213, 215 entnommen wurden. Es wird also die Stückzahl der entnommenen Gegenstände bestimmt. In Schritt 234 wird die Information, welche Artikel und wieviel Artikel entnommen wurden, mit der Kommunikationsvorrichtung 66 des Regals 60 an die Computing Cloud 63 geschickt. Das Verfahren wird dann mit Schritt 231 mit der Entnahme eines weiteren Artikels fortgesetzt.

Fig. 7 zeigt schematisch ein erstes Verfahren zur Bestimmung eines Ortes auf dem Regalfachboden 200, an dem ein Artikel entnommen wurde. In Schritt 271 werden alle Wägevorrichtungen 261, 262, 263, 264 tariert, das heißt der Regalfachboden 200 und alle darauf aufgebrachten Artikel werden so behandelt, als wären sie eine Vorlast für die Wägevorrichtungen 261, 262, 263, 264 und auf Null gesetzt. In Schritt 272 wird von zumindest einer Wägevorrichtung 261, 262, 263, 264 ein neuer Gewichtswert gemessen und von der Auswerteeinrichtung 265 empfangen. In Schritt 273 berechnet die Auswerteeinrichtung 265 aufgrund der aktuellen Gewichtsdaten der Wägevorrichtungen 261, 262, 263, 264 Schwerpunktkoordinaten. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 274 wird dieser Ort und die Änderung des Gewichts an die Steuereinrichtung 241 weitergegeben.

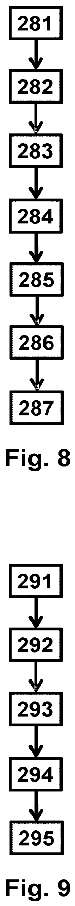

Fig.8 zeigt schematisch ein zweites Verfahren zur Bestimmung eines Ortes auf dem Regalfachboden 200, an dem ein Artikel entnommen wurde. In Schritt 281 werden Schwerpunktkoordinaten vom aktuellen Schwerpunkt des Regalfachbodens 200 inklusiver aller Artikel die darauf aufgelegt sind ermittelt. Dabei handelt es sich um den echten Schwerpunkt. Der Regalfachboden 200 oder zumindest die Artikel, die darauf aufgelegt sind, sind nicht tariert. In Schritt 282 wird von zumindest einer Wägevorrichtungen 261, 262, 263, 264 ein neuer Gewichtswert gemessen und von der Auswerteeinrichtung 265 empfangen. In Schritt 283 werden neue Schwerpunktkoordinaten von der Auswerteeinrichtung 265 aus den neuen Daten der Wägevorrichtungen 261, 262, 263, 264 bestimmt. In Schritt 284 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 285 der Vektor mit Hilfe des Gesamtgewichts des Regalfachbodens und der Änderung des Gesamtgewichts skaliert. Der Ort, an dem ein Produkt aus dem Regalfachboden 200 entnommen wurde ergibt sich in Schritt 286, indem zu den vorhergehenden Schwerpunktkoordinaten der skalierte Vektor addiert wird. In Schritt 287 wird dieser Ort und die Änderung des Gewichts an die an die Steuereinrichtung 241 weitergegeben.

Fig. 9 zeigt schematisch ein drittes Verfahren zur Bestimmung eines Ortes auf dem Regalfachboden 200, an dem ein Artikel hinzugefügt oder entnommen wurde. In Schritt 291 wir durch alle Wägevorrichtungen 261, 262, 263, 264 jeweils ein Gewichtswert bestimmt, der vorhergehende Gewichtswert. In Schritt 292 wird von zumindest einer Wägevorrichtung 261, 262, 263, 264 ein neuer Gewichtswert gemessen und von der Auswerteeinrichtung 265 empfangen. In Schritt 293 berechnet die Auswerteeinheit 265 für jede Wägevorrichtung 261, 262, 263, 264 separat die Änderung des Gewichtswert, das heißt, die Auswerteeinheit bildet die Differenz aus dem neuen Gewichtswert und dem vorhergehenden Gewichtswert. In Schritt 294 berechnet die Auswerteeinrichtung 265 die Schwerpunktkoordinaten der Differenzwerte der vier Wägevorrichtung 261, 262, 263, 264. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 295 wird dieser Ort und die Änderung des Gewichts an die Steuereinrichtung 241 weitergegeben.

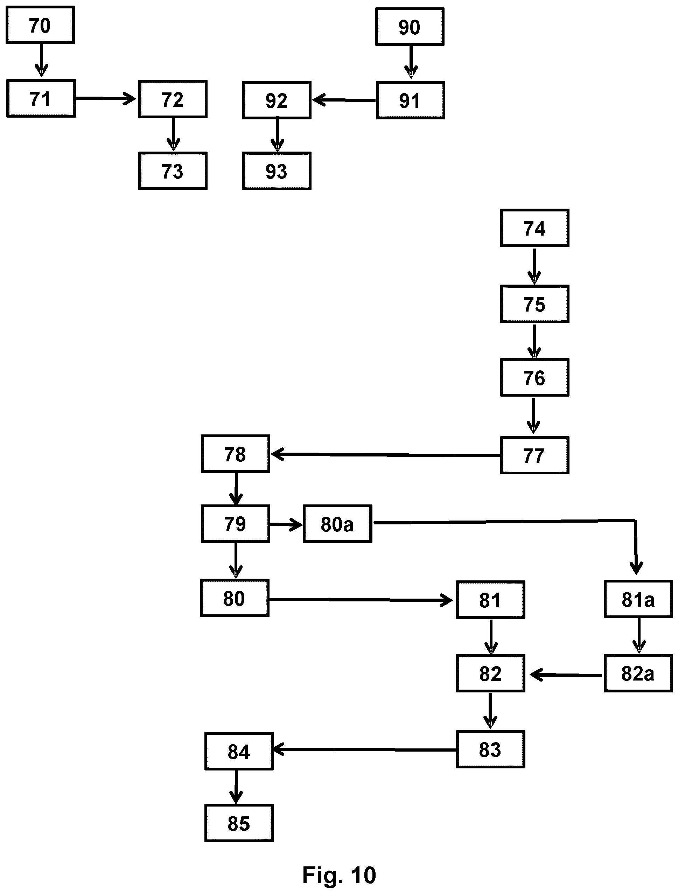

Fig. 10 zeigt schematisch ein Verfahren zum Selbst-Checkout in einem Ladengeschäft. Die Verfahrensschritte werden teileweise von einem Regal 60 mit automatischer Entnahmeüberwachung, Teilweise vom Kunden mit dessen Produktscanner 62, teilweise von einer Verkaufsvorrichtung 10, 40 und teilweise von einer Steuervorrichtung 64 in einer Computing Cloud 63 oder auf einem Server in einem Netzwerk ausgeführt. Die Schritte 70, 71 werden vom Regal 60 mit automatischer Entnahmeüberwachung ausgeführt, während ein Kunde durch das Ladengeschäft geht und die Artikel für seinen Einkauf zusammenstellt. Gleichzeitig scannt der Kunde mit einem Produktscanner 62 die Artikel. Die Schritte 90, 91 werden mit dem Produktscanner ausgeführt. Die Schritte auf der rechten Seite in Fig. 10 werden von der Verkaufsvorrichtung 10, 40 ausgeführt. Die verbleibenden Schritte in der Mitte in Fig. 10 werden von der Computing Cloud 63 mit einer Steuervorrichtung 64 oder von einem Server, der ebenfalls die Funktion einer Steuervorrichtung wahrnehmen kann, ausgeführt.

Beim Selbst-Checkout in einem Ladengeschäft ist der Kunde dafür zuständig, seine Einkäufe selbst aus den Regalen 60 zu nehmen, mit dem Produktscanner 62 zu scannen und zum Abschließen des Einkaufs die Produkte an einer Verkaufsvorrichtung 10, 40 zum Selbst-Checkout selbst zu bezahlen. Das Zusammenstellen der Abrechnung übernimmt die Computing Cloud. Das Ladengeschäft kann somit auf Kassenpersonal verzichten. Der Kunde ersetzt das Kassenpersonal und ist somit selbst Bediener der Selbst-Checkout Verkaufsvorrichtung 10, 40.

Der Kunde nimmt einen Einkaufswagen 11 oder Einkaufskorb 41 und geht damit durch das Ladengeschäft und nimmt sich die gewünschten Artikel aus den Regalen 60. Währenddessen überwachen die Regale 60 fortlaufend und automatisch die Entnahme von Artikeln durch die Kunden. Dies findet in einem ersten Schritt 70 statt. Dieser Schritt wird von allen Regalen und für alle Kunden ausgeführt. Es wird nicht von den Regalen detektiert, welcher Kunde etwas nimmt, sondern lediglich, dass etwas entnommen wurde. Die Entnahmeüberwachung und das Detektieren eines entnommenen Artikels sowie die Bestimmung dessen Artikeldaten erfolgt gemäß der Beschreibung mit Bezug zu Fig. 4 bis Fig. 9. In Schritt 71 sendet das Regal 60 über die Kommunikationsvorrichtung 66 die Artikeldaten der entnommenen Artikel und sowie deren Anzahl an die Computing Cloud 63.

Wenn der Kunde 61 einen Artikel aus dem Regal 60 nimmt, scannt er ihn mit dem Produktscanner in Schritt 90, bevor er den Artikel in den Einkaufswagen 11 oder Einkaufskorb 41 legt. Der Produktscanner 62 sendet die Artikelinformation in Schritt 91 an die Computing Cloud 63.

Eine Steuervorrichtung 64 in der Computing Cloud 63 empfängt die Artikeldaten und die Anzahl der entnommenen Artikel in Schritt 72. In Schritt 73 fügt die Steuervorrichtung 64 die Artikeldaten und die Anzahl entnommener Artikel einer Liste von zur Bezahlung vorgesehener Artikel zu. Diese Schritte finden fortlaufend für alle Regale statt. Die Steuervorrichtung 64 in der Computing Cloud 63 empfängt in Schritt 92 von dem Produktscanner 62 die Artikelnummer des entnommenen Artikels. In Schritt 93 fügt die Steuervorrichtung die Artikelnummer zu einer dem Produktscanner 62 zugeordneten Liste von Artikeln hinzu. In einer Ausführungsform werden der Liste weitere Artikeldaten zusätzlich zur Artikelnummer zugefügt, so zum Beispiel eine Kurzbeschreibung des Artikel, ein Preis oder sonstige Artikeldaten.

In Schritt 74 erkennt die Verkaufsvorrichtung 10, 40 das Auflegen eines Einkaufswagens 11 oder Einkaufskorbes 41 auf der Auflageplatte 13, 43 durch die Veränderung eines, mit einer Wägezelle 18, 48 und einer dazugehörigen Gewichtsverarbeitungsvorrichtung 24, 54, gemessenen Gewichtswertes und bestimmt das Gewicht des Einkaufswagens 11 oder des Einkaufskorbes 41 mitsamt dessen Inhalt. Dabei wird das Leergewicht des Einkaufswagens 41 oder des Einkaufskorbes 41 vom gemessenen Gewicht abgezogen, so dass ausschließlich das Gewicht der Artikel in dem Einkaufswagen 11 oder in dem Einkaufskorb 41 bestimmt werden.

In Schritt 75 werden die Verkaufsvorrichtung 10, 40 und der Produktscanner 62 synchronisiert. Dies kann durch eine direkte Synchronisation über Bluetooth zwischen Verkaufsvorrichtung 10, 40 und Produktscanner 62 erfolgen. In einer Ausführungsform scannt ein Kunde 61 mit seinem Produktscanner 62 ein QR Code an der Verkaufsvorrichtung 10, 40 ein, so dass der Produktscanner 62 selbst die Zuordnung zur Verkaufsvorrichtung 10, 40 übernimmt. Dies geschieht, indem der Productscanner 62 die eingescannte Information, das heißt die Identifikation der Verkaufsvorrichtung 10, 40, über das Netzwerk an die Computing Cloud 63 schickt und diese Information in der Steuervorrichtung 64 der Computing Cloud 63 weiterverarbeitet wird. Wichtig ist, dass es später eine Zuordnung zwischen den Sensordaten der Verkaufsvorrichtung 10, 40 und der entsprechenden Liste der eingescannten Artikel des Produktscanners 62 des Kunden 61 geben kann, der seinen Einkauf mit dem Einkaufswagen 11 oder Einkaufskorb 41 auf der Verkaufsvorrichtung 10, 40 abgestellt hat. In Schritt 76 wird durch die Kamera 14, 44 der Verkaufsvorrichtung 10, 40 mindestens ein Bild einer offenen Seite des Einkaufswagens 11 oder des Einkaufskorbes gemacht 41. In Schritt 77 werden die Bilddaten und Gewichtsdaten sowie optional die Information über den Produktscanner 62 über ein Netzwerk 25, 55 von der Verkaufsvorrichtung 10, 40 an die Computing Cloud 63 geschickt. Es ist vorgesehen, dass der Produktscanner 62 die eingescannten Daten über die Artikel fortlaufend in Schritt 91 an die Computing Cloud 63 übermittelt, so dass in Schritt 77 nur noch die entsprechende Identifikation des Produktscanners übermittelt werden muss. In einer Ausführungsform ist hingegen vorgesehen, dass der Produktscanner 62 alle Artikel lokal speichert und dann in Schritt 77 die Liste der Artikel, die dem Produktscanner 62 zugeordnet ist, indirekt über die Verkaufsvorrichtung 10, 40 oder direkt über die Kommunikationsvorrichtung 65, 66 vom Produktscanner 62 an die Computing Cloud 63 übermittelt wird.

In Schritt 78 empfängt die Computing Cloud 63 die Bilddaten und Gewichtsdaten von der Verkaufsvorrichtung 10, 40. Des Weiteren empfängt in Schritt 78 die Computing Cloud 63 die Information, zu welchem Produktscanner 62 die empfangenen Bilddaten und Gewichtsdaten gehören. Die Steuervorrichtung 64 der Computing Cloud 63 umfasst eine Auswerteeinrichtung, die aufgrund der Gewichtsdaten und der Bilddaten in Schritt 79 alle Artikel, die sich in dem betreffenden Einkaufswagen 11 oder Einkaufskorb 41 befinden, mit der Liste der dem Produktscanner 62 zugeordneten Artikel vergleicht. Dabei wird der Inhalt des Einkaufswagens 11 oder des Einkaufskorbes 41 validiert, das heißt, es wird anhand der Gewichtsdaten und der Bilddaten geprüft, ob die Liste der dem Produktscanner 62 zugeordneten Artikel alle Artikel umfasst, die tatsächlich im Einkaufswagen 11 oder Einkaufskorb 41 liegen. Dabei legt die Auswerteeinrichtung die Bilddaten zugrunde und führt ein Objekterkennungsverfahren durch. Die Auswerteeinrichtung lässt nur Lösungen zu, bei dem ein Set aus Artikeln erkannt wird, deren summierte Einzelgewichte dem von der Verkaufsvorrichtung 10, 40 übermittelten gemessenen Gewicht der Artikel im Einkaufswagen 11 oder Einkaufskorb 41 entspricht. Dabei ist es dem Fachmann bewusst, dass das Verfahren zur Objekterkennung auf Basis von Wahrscheinlichkeitsrechnung erfolgt und die Gewichtsdaten dazu dienen, in der Auswerteeinrichtung die Wahrscheinlichkeit für die eine oder die andere Lösung zu erhöhen. Im Fall, dass die Validation abgeschlossen wurde und die Artikel auf der dem Produktscanner zugeordneten Liste mit den Bilddaten und Gewichtsdaten der Verkaufsvorrichtung 10, 40 übereinstimmen, sendet in Schritt 80 die Computing Cloud 63 ein Freigabesignal an die Verkaufsvorrichtung 10, 40. In einer Ausführungsform 10, 40 werden weitere Informationen zu den Artikeln, wie zum Beispiel Artikelbezeichnung und Preis oder der Inhalt eines Kassenbons an die Computing Cloud 63 gesendet.

In Schritt 81 empfängt die Verkaufsvorrichtung 10, 40 das Freigabesignal von der Computing Cloud 63. In Schritt 82 startet die Verkaufsvorrichtung 10, 40 über die Ein-/ Ausgabeeinheit 20, 50 und die Bezahleinheit 30, 50a den Bezahlvorgang mit dem Kunden. Hat der Kunde die Artikel bezahlt, so kann er das Ladengeschäft verlassen. Die Verkaufsvorrichtung 10, 40 sendet dann in Schritt 83 eine Bestätigung an die Computing Cloud 63. Die Computing Cloud 63 empfängt in Schritt 84 die Bestätigung über den Bezahlvorgang der Artikel und löscht die bezahlten Artikel in Schritt 85 mit der Steuervorrichtung von der Liste der zu bezahlenden Artikel. Außerdem wird die Liste der dem Produktscanner 62 zugeordneten Artikel gelöscht.

Wenn Artikel im Einkaufswagen 11 oder Einkaufskorb 41 liegen, die nicht gescannt wurden, findet in Schritt 79 keine Validation statt, weil die Steuervorrichtung eine Diskrepanz zwischen der dem Produktscanner zugeordneten Liste von Artikeln und den in Schritt 78 empfangenen Bilddaten und Gewichtsdaten feststellt. Dann sendet die Computing Cloud 63 in Schritt 80a die Liste der zur Bezahlung vorgesehenen Artikel oder einen Teil davon an die Verkaufsvorrichtung 10, 40. In einer Ausführungsform umfasst der Teil der Liste der zur Bezahlung vorgesehenen Artikel, der an die Verkaufsvorrichtung 10, 40 gesendet wird, nur Artikel, die keinem Produktscanner zugeordnet sind. Nur bei diesen Artikeln ist bisher unklar in welchem Einkaufswagen 11 oder Einkaufskorb 41 sie sich befinden. In einer Ausführungsform umfasst der Teil der Liste der zur Bezahlung vorgesehenen Artikel, der an die Verkaufsvorrichtung 10, 40 gesendet wird, nur Artikel, die keinem Produktscanner zugeordnet sind und die zusätzlich aufgrund eines Objekterkennungsverfahrens aufgrund der Bilddaten und Gewichtsdaten sich mit hoher Wahrscheinlichkeit in dem Einkaufswagen 11 oder Einkaufskorb 41 befinden, der sich gerade auf der Auflageplatte 13, 43 befindet. In Schritt 81a empfängt die Verkaufsvorrichtung 10, 40 die Artikel von der Computing Cloud 63, die in Schritt 80a gesendet wurden und zeigt diese dem Kunden in der Ein-/Ausgabeeinheit 30, 50 an.

Der Kunde kann in Schritt 82a aus der angezeigten Liste die fehlenden Artikel über die Ein-/Ausgabeeinheit 30, 50 auswählen und der Liste seiner Einkäufe hinzufügen. In einer Ausführungsform ist eine weitere Validierung in der Computing Cloud 63 vorgesehen. In Schritt 82 bezahlt der Kunde seinen Einkauf und das Verfahren wird wie oben beschrieben mit den Schritten 83 bis 85 abgeschlossen.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

**Patentansprüche**

1. Verfahren zum Betrieb einer Verkaufsvorrichtung für Waren, insbesondere Einzelhandelswaren, wobei dass das Verfahren die Schritte umfasst:

   - detektieren, mit einem Regal mit automatischer Entnahmeüberwachung, eines entnommenen Artikels und Bestimmung von dessen Artikeldaten,
   - empfangen, durch eine Steuervorrichtung, der Artikeldaten des entnommenen Artikels,
   - hinzufügen, mit der Steuervorrichtung, der Artikeldaten des entnommenen Artikels zu einer Liste von zur Bezahlung vorgesehener Artikel,
   - empfangen, durch die Steuervorrichtung, einer Artikelnummer von einem Produktscanner,
   - hinzufügen, mit der Steuervorrichtung, des zur Artikelnummer zugehörigen Artikel zu einer Liste, die dem Produktscanner zugeordnet ist,
   - identifizieren des Produktscanners an der Verkaufsvorrichtung,
   - erheben, mit mindestens einem Sensor, von Daten über Artikel in einem Einkaufswagen oder einem Einkaufskorb, welcher auf einer Auflageplatte der Verkaufsvorrichtung steht,
   - validieren, mit einer Auswerteeinrichtung, der dem Produktscanner zugeordneten Liste mit Artikeln aufgrund der Daten des mindestens einen Sensors und der Liste der zur Bezahlung vorgesehenen Artikel.

2. Verfahren zum Betrieb einer Verkaufsvorrichtung nach Anspruch 1, wobei der mindestens eine Sensor mindestens eine Kamera, insbesondere mindestens eine CCD Kamera, ist und die Daten des mindestens einen Sensors Bilddaten sind und/oder mindestens eine Wägezelle ist und die Daten des mindestens einen Sensors Gewichtsdaten sind.

3. Verfahren zum Betrieb einer Verkaufsvorrichtung nach Anspruch 1 oder 2, wobei der Schritt des Validierens der dem Produktscanner zugeordneten Liste mit Artikeln den Schritt umfasst:

   - anwenden eines Verfahrens zur Objekterkennung in der Auswerteeinrichtung, wobei das Verfahren zur Objekterkennung in den Daten des mindestens einen Sensors objektbeschreibende Attribute erkennt und diese mit objektbeschreibenden Attributen von Artikeln vergleicht, die in der Liste der zur Bezahlung vorgesehenen Artikel sind.

4. Verfahren zum Betrieb einer Verkaufsvorrichtung nach einem der Ansprüche 1 bis 3, wobei das Verfahren zum Validieren der dem Produktscanner zugeordneten Liste mit Artikeln nur Artikel erkennt, die zur Liste der zur Bezahlung vorgesehenen Artikel gehören.

5. Verfahren zum Betrieb einer Verkaufsvorrichtung nach einem der Ansprüche 1 bis 4, wobei mindestens ein Regal mit automatischer Entnahmeüberwachung zum Detektieren des entnommenen Artikels folgende Schritte ausführt:

- empfangen eines Signals von mindestens zwei, vorzugsweise drei oder vier Wägezellen, die in den Ecken eines starren Körpers, der einen Auslagebereich mit mindestens zwei Produktbereichen bildet, angeordnet sind, wobei die Signale den Gewichtskräften im Bereich der Ecken des starren Körpers entsprechen,
- ermitteln, mit einer Auswerteeinheit, von Schwerpunktkoordinaten und einer Gesamtgewichtskraft aus den empfangenen Signalen,
- empfangen eines Signals das einer neuen Gewichtskraft entspricht von mindestens einer Wägezelle und ermitteln mit der Auswerteeinheit neuer Schwerpunktkoordinaten aus den von den Wägezellen aktuell empfangenen Daten,
- ermitteln (63) eines Produktbereichs und eines Gewichts der aus dem Produktbereich entnommenen Artikel, und
- bestimmen der Artikeldaten des aus dem Regal entnommenen Artikels aufgrund des ermittelten Produktbereichs und bestimmen der Anzahl der entnommenen Artikel aufgrund des dem Produktbereichs entnommenen Gewichts und des spezifischen Gewichts des Artikels.

6. Verfahren zum Betrieb einer Verkaufsvorrichtung nach Anspruch 5, wobei bei einer Änderung des Gesamtgewichts in Vektor zwischen den vorhergehenden Schwerpunktkoordinaten und den neuen Schwerpunktkoordinaten ermittelt wird, und der von der Steuereinheit bestimmte Regalbereich aus dem Vektor und dem Gesamtgewicht von der Steuereinheit ermittelt wird.

7. Verfahren zum Betrieb einer Verkaufsvorrichtung nach Anspruch 5, wobei alle Wägezellen periodisch und gleichzeitig tariert werden.

8. Verfahren zum Betrieb einer Verkaufsvorrichtung nach Anspruch 5, wobei zur Ermittlung der neuen Schwerpunktskoordinaten für jede Wägezelle die Differenz aus einem neuen Gewichtswert und einem vorhergehenden Gewichtswert gebildet wird und aus den vier Differenzwerten die neuen Schwerpunktskoordinaten ermittelt werden.

9. Verfahren zum Betrieb einer Verkaufsvorrichtung nach einem der Ansprüche 3 bis 8, wobei ein Verfahren zur Objekterkennung ein optisches Verfahren ist und auf Kantenerkennung, Transformationen, Größen und/oder Farberkennung beruht.

10. Verfahren zum Betrieb einer Verkaufsvorrichtung nach einem der Ansprüche 3 bis 9, wobei ein Verfahren zur Objekterkennung ein Verfahren ist, das einen gemessenen Gewichtswert mit dem Gewicht mindestens eines Artikel auf der Liste der zur Bezahlung vorgesehenen Artikel vergleicht.

11. Verfahren zum Betrieb einer Verkaufsvorrichtung nach einem der Ansprüche 1 bis 10, wobei das Verfahren folgende Schritte umfasst:

- im Fall, dass im Validierungsschritt die Artikel validiert werden konnten, ermitteln eines Gesamtpreises für einen Bezahlvorgang aus der Summe aller Einzelpreise der Artikel, die auf der dem Produktscanner zugeordneten Liste von Artikeln sind, und
- ausführen eines Bezahlvorgang über ein Mobile Payment Verfahren, eine EC-Karte oder Kreditkarte oder über eine Barzahl-Vorgang.

12. Verfahren zum Betrieb einer Verkaufsvorrichtung nach einem der Ansprüche 1 bis 10, wobei das Verfahren folgende Schritte umfasst:

- im Fall, dass im Validierungsschritt Artikel nicht validiert werden konnten, anzeigen auf einer Ein-/Ausgabeeinheit der Verkaufsvorrichtung mindestens eines Teils der Liste der zur Bezahlung vorgesehenen Artikel, und
- empfangen weiterer Artikel, die für einen Bezahlvorgang vorgehen sind, über die der Ein-/Ausgabeeinheit.

13. Verfahren zum Betrieb einer Verkaufsvorrichtung nach Anspruch 12, wobei beim Anzeigen auf einer Ein-/Ausgabeeinheit der Verkaufsvorrichtung mindestens eines Teils der Liste der zur Bezahlung vorgesehenen Artikel nur die Artikel oder ein Teil dieser Artikel angezeigt werden, die nicht auf einer der den Produktscannern zugeordneten Listen sind.

**14.** Verkaufsvorrichtung zum Selbst-Checkout von Waren in einem Ladengeschäft, insbesondere in einem Supermarkt, wobei das Ladengeschäft mindestens ein Regal mit automatischer Entnahmeüberwachung und ein Netzwerk zum Austausch von Daten umfasst, wobei die Verkaufsvorrichtung eine Steuervorrichtung zur Steuerung der Verkaufsvorrichtung, eine Kommunikationseinheit zum Empfangen von Daten aus dem Netzwerk sowie eine Datenbank zum Speichern von Artikeldaten und zu den Artikeln dazugehörigen objektbeschreibenden Attributen umfasst, wobei die Steuervorrichtung ausgelegt ist, über das Netzwerk von dem mindestens einen Regal mit automatischer Entnahmeüberwachung Artikeldaten von entnommenen Artikeln zu empfangen und die Steuervorrichtung daraus eine Liste der zur Bezahlung vorgesehenen Artikel ermittelt, und wobei die Steuervorrichtung ausgelegt ist, über das Netzwerk von dem mindestens einen Produktscanner Artikelnummern zu empfangen und die Steuervorrichtung daraus eine dem Produktscanner zugeordnete Liste von Artikeln ermittelt, wobei die Verkaufsvorrichtung eine Vorrichtung zum identifizieren des Produktscanners aufweist, und wobei die Verkaufsvorrichtung mindestens einen Sensor zum Erheben von Daten über Artikel in einem Einkaufswagen oder Einkaufskorb, welcher auf einer Auflageplatte der Verkaufsvorrichtung steht, aufweist, und wobei die Verkaufsvorrichtung eine Auswerteeinrichtung umfasst, die eine dem Produktscanner zugeordnete Liste mit Artikeln aufgrund der Daten des Sensors und der Liste der zur Bezahlung vorgesehenen Artikel validiert.

**15.** Verkaufsvorrichtung zum Selbst-Checkout von Waren nach Anspruch 14, wobei die Auswerteeinrichtung aus den Daten des mindestens einen Sensors objektbeschreibende Attribute erkennt und diese mit objektbeschreibenden Attributen von Artikeln vergleicht, die in der Liste der dem Produktscanner zugeordneten Artikel sind.

**16.** Verkaufsvorrichtung zum Selbst-Checkout von Waren nach Anspruch 14 oder 15, wobei die Verkaufsvorrichtung ein Teil eines Verbundes von mehreren Verkaufsvorrichtungen in dem Ladengeschäft ist und die Datenbank eine gemeinsame Datenbank für alle Verkaufsvorrichtungen des Verbundes von mehreren Verkaufsvorrichtungen ist und die Verkaufsvorrichtungen über ein Netzwerk mit der Datenbank verbunden sind.

**17.** Verkaufsvorrichtung zum Selbst-Checkout von Waren nach einem der Ansprüche 14 bis 16, wobei sich zumindest Teile der Steuervorrichtung, der Auswerteeinrichtung und/oder der Datenbank außerhalb des Ladengeschäfts, insbesondere auf einem Server oder in einem Cloud-Netzwerk befinden und die Verkaufsvorrichtung über ein Netzwerk auf diese Teile der der Steuervorrichtung, der Auswerteeinrichtung und/oder der Datenbank zugreift.

**Fig. 1**

14

Fig. 2

**Fig. 3**

**Fig. 4**

**Fig. 5**

230

231

232

233

234

Fig. 6

271

272

273

274

Fig. 7

281

↓

282

↓

283

↓

284

↓

285

↓

286

↓

287

**Fig. 8**

291

↓

292

↓

293

↓

294

↓

295

**Fig. 9**

**Fig. 10**

**Europäisches Patentamt**
**European Patent Office**
**Office européen des brevets**

# EUROPÄISCHER RECHERCHENBERICHT

**Nummer der Anmeldung**

EP 20 21 7326

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/284132 A1 (KIM UNIYOUNG [KR] ET AL) 8. November 2012 (2012-11-08) * Zusammenfassung; Abbildungen * * Absätze [0144], [0150], [0164] - [0167], [0189] - [0195], [0236] - [0247] * | 1-17 | INV. G07G1/14 G07G1/00 G06Q20/20 G06Q20/18 G01G19/414 A47F3/00 A47F9/04 |
| A | US 2019/147709 A1 (SCHONER BERND [US]) 16. Mai 2019 (2019-05-16) * Zusammenfassung; Abbildungen * * Absätze [0040] - [0072] * | 1-17 | |
| A | EP 3 654 305 A1 (BIZERBA SE & CO KG [DE]) 20. Mai 2020 (2020-05-20) * Zusammenfassung; Abbildungen * * Absätze [0023] - [0032] * | 1-17 | |
| A | US 2018/240180 A1 (GLASER WILLIAM [US] ET AL) 23. August 2018 (2018-08-23) * Zusammenfassung * * Absätze [0046] - [0098] * | 1-17 | RECHERCHIERTE SACHGEBIETE (IPC) |
| A | US 10 520 353 B1 (SHI QICAI [US] ET AL) 31. Dezember 2019 (2019-12-31) * Zusammenfassung; Abbildungen * * Spalte 17, Zeile 57 - Spalte 19, Zeile 32 * | 1-17 | G07G G06Q G01G A47F |

Der vorliegende Recherchenbericht wurde für alle Patentansprüche erstellt

| Recherchenort | Abschlußdatum der Recherche | Prüfer |
|---|---|---|
| Den Haag | 31. Mai 2021 | Schöndienst, Thilo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 7326

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2021

| Im Recherchenbericht angeführtes Patentdokument | Datum der Veröffentlichung | Mitglied(er) der Patentfamilie | Datum der Veröffentlichung |
|---|---|---|---|
| US 2012284132 A1 | 08-11-2012 | KEINE | |
| US 2019147709 A1 | 16-05-2019 | US 10699536 B1 | 30-06-2020 |
| | | US 10699537 B1 | 30-06-2020 |
| | | US 10950099 B1 | 16-03-2021 |
| | | US 10950100 B1 | 16-03-2021 |
| | | US 10957168 B1 | 23-03-2021 |
| | | US 2019147709 A1 | 16-05-2019 |
| EP 3654305 A1 | 20-05-2020 | EP 3654305 A1 | 20-05-2020 |
| | | US 2020151696 A1 | 14-05-2020 |
| US 2018240180 A1 | 23-08-2018 | KEINE | |
| US 10520353 B1 | 31-12-2019 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1717772 A1
- EP 3620760 B1

- EP 19220148